(19) Europäisches Patentamt / European Patent Office / Office européen des brevets

(11) **EP 4 041 998 B1**

(12) **FASCICULE DE BREVET EUROPEEN**

(45) Date de publication et mention
de la délivrance du brevet:
**01.11.2023 Bulletin 2023/44**

(21) Numéro de dépôt: **20774986.2**

(22) Date de dépôt: **22.09.2020**

(51) Classification Internationale des Brevets (IPC):
*F01N 3/10* $^{(2006.01)}$    *F01N 11/00* $^{(2006.01)}$
*F01N 13/00* $^{(2010.01)}$    *F02D 41/00* $^{(2006.01)}$
*F02D 41/04* $^{(2006.01)}$    *F02D 41/12* $^{(2006.01)}$
*F02D 41/14* $^{(2006.01)}$    *F02D 41/22* $^{(2006.01)}$

(52) Classification Coopérative des Brevets (CPC):
**F01N 11/007; F01N 13/008; F02D 41/045;**
**F02D 41/123; F02D 41/1441; F02D 41/1455;**
**F02D 41/22;** F01N 3/101; F01N 2430/00;
F01N 2550/02; F01N 2560/025; F01N 2560/14;
F01N 2900/08; F01N 2900/10; F01N 2900/1624;

(Cont.)

(86) Numéro de dépôt international:
**PCT/EP2020/076366**

(87) Numéro de publication internationale:
**WO 2021/069204 (15.04.2021 Gazette 2021/15)**

(54) **PROCÉDÉ DE DIAGNOSTIC D'UN SYSTÈME DE POST-TRAITEMENT D'UN MOTEUR À ALLUMAGE COMMANDÉ**

DIAGNOSEVERFAHREN FÜR EIN ABGASNACHBEHANDLUNGSSYSTEM EINES FREMDGEZÜNDETEN VERBRENNUNGSMOTORS

DIAGNOSTIC METHOD OF AN EXHAUST GAS AFTERTREATMENT SYSTEM OF A SPARK IGNITED INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2019 FR 1911084**

(43) Date de publication de la demande:
**17.08.2022 Bulletin 2022/33**

(73) Titulaires:
- **Renault s.a.s**
  **92100 Boulogne Billancourt (FR)**
- **NISSAN MOTOR Co., Ltd.**
  **Yokohama-shi, Kanagawa 221-0023 (JP)**

(72) Inventeurs:
- **ALONSO-RODRIGUEZ, Manuel**
  **49600 Benavente (Zamora) (ES)**
- **CARCEL-CUBAS, Juan-Antonio**
  **47270 Cigales (ES)**
- **GERAULT, Alain**
  **91680 BRUYERES LE CHATEL (FR)**
- **OTTONELLI, Claudio**
  **75011 PARIS (FR)**
- **PALACIOS-ARMAS, Alfonso**
  **CP28012 MADRID (ES)**

(74) Mandataire: **Renault Group**
**Renault s.a.s.**
**1 avenue du Golf**
**FR TCR AVA 055**
**78084 Guyancourt Cedex (FR)**

(56) Documents cités:
DE-A1-102010 035 365    DE-A1-102015 205 971
DE-A1-102016 213 767    DE-A1-102017 126 928
US-A1- 2019 078 490    US-B2- 10 392 996

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)
Y02T 10/40

**Description**

**Domaine technique de l'invention**

La présente invention concerne un procédé de diagnostic d'un système de post-traitement d'un moteur à combustion interne du type à allumage commandé. Plus précisément, il concerne un procédé permettant de diagnostiquer un catalyseur trois voies ainsi qu'une sonde à oxygène amont et une sonde à oxygène aval associées, qui sont montés à l'échappement d'un moteur à allumage commandé. Elle trouve une application particulièrement avantageuse dans les moteurs des véhicules automobiles.

**Etat de la technique**

Le post-traitement des émissions polluantes des moteurs à allumage commandé (fonctionnant notamment à l'essence) à catalyse par oxydo-réduction se fonde sur la gestion de la quantité d'oxygène (ou : OS, pour « Oxygen Storage ») qui est présente dans le catalyseur, cette quantité d'oxygène permettant de créer un milieu oscillant réducteur-oxydant pour traiter différents types de molécules polluantes émises dans les gaz de combustion, telles que les hydrocarbures imbrûlés HC, le monoxyde de carbone CO et les oxydes d'azote NOx.

Pour créer les conditions nécessaires à une telle catalyse, une sonde à oxygène disposée en amont du système de post-traitement est nécessaire pour contrôler la richesse des gaz d'échappement, afin qu'elle oscille autour de la valeur de richesse 1 correspondant aux proportions stœchiométriques du mélange air-carburant. On passe alternativement d'un fonctionnement en mélange pauvre à un fonctionnement en mélange riche. On parle alors de fenêtre catalytique pour désigner une plage relativement étroite de richesse autour de la valeur 1, dans laquelle la fraction traitée des différents polluants est très élevée.

Historiquement, cette régulation a été réalisée avec des sondes à oxygène binaires disposées en amont et en aval du système de post-traitement, permettant seulement de faire osciller le système entre un fonctionnement en mélange riche et un fonctionnement en mélange pauvre. Pour la régulation de la richesse des gaz d'échappement, le retour de la sonde aval est utilisé pour décaler, par exemple avec un décalage constant, la richesse stoechiométrique (c'est-à-dire la richesse 1) de quelques millièmes autour de la valeur 1 de manière à compenser l'effet des dispersions ou du vieillissement du système.

Il existe par ailleurs des sondes à oxygène proportionnelles, présentant généralement une courbe de transfert entre un signal délivré par la sonde, qui est généralement une intensité de courant électrique I, et une valeur de richesse R des gaz mesurés. Avec une sonde proportionnelle la régulation de richesse peut se faire par rapport à n'importe quelle consigne de richesse, étant donné que la sonde permet de mesurer la richesse, et non pas seulement de déterminer une valeur binaire associée à l'état riche ou à l'état pauvre, comme c'est le cas pour les sondes binaires.

Cela permet de diminuer les émissions polluantes par rapport à une régulation de richesse avec une sonde à oxygène binaire qui peut seulement garantir la transition riche-pauvre. L'utilisation d'une sonde à oxygène proportionnelle permet de calculer la consigne de richesse en fonction de la réponse de la sonde à oxygène aval pendant le temps nécessaire à la catalyse. On gère ainsi la quantité d'oxygène stockée dans le catalyseur, ce qui permet de s'adapter d'une part à l'état de fonctionnement du catalyseur (qui dépend de son dimensionnement et de son vieillissement), et d'autre part, aux conditions de roulages passées qui ont été rencontrées par le catalyseur, et qui permettent d'estimer l'état de remplissage courant en oxygène du catalyseur. Par exemple, après une longue décélération pendant laquelle on coupe l'injection de carburant, le catalyseur sera saturé en oxygène, et après une longue accélération à la pleine charge du moteur pour laquelle on utilise une richesse supérieure à 1, il sera vide d'oxygène.

On pourra par exemple se référer à la publication FR-A1-2833309, qui divulgue un dispositif de régulation en double boucle de la richesse, utilisant le signal d'une sonde à oxygène amont, dans lequel la consigne de richesse est ajustée en fonction du retour du signal d'une sonde à oxygène aval.

La publication FR-A1-3033364 décrit un autre exemple de régulation en double boucle de la richesse avec une sonde amont proportionnelle par rapport à une consigne variable. Dans cette publication, cette régulation est appliquée à la gestion de l'oxygène stocké. La consigne de richesse est ajustée en fonction d'une quantité d'oxygène dans le catalyseur, ladite quantité étant calculée en continu à partir du signal de la sonde amont.

La régulation proprement dite ne se sert que du signal de la sonde amont. Toutefois, le recours à une sonde aval est nécessaire pour réinitialiser le modèle de calcul de la quantité d'oxygène stockée, dite aussi OS (de l'acronyme anglais pour : Oxygen Storage) à une valeur égale à 0 ou à la capacité de stockage en oxygène (ou : OSC pour Oxygen Storage Capacity) du catalyseur, en fonction du basculement du signal de la sonde aval respectivement au-dessus ou en dessous d'un seuil. En outre, la sonde aval est aussi nécessaire pour déterminer une valeur de la capacité de stockage en oxygène du catalyseur.

Dans ce contexte, les normes de diagnostic embarqués des véhicules automobiles (dites aussi : normes OBD pour On Board Diagnostics) exigent de contrôler l'état de fonctionnement du système de post-traitement, c'est-à-dire du catalyseur, de la sonde à oxygène amont proportionnelle et de la sonde aval binaire, et d'allumer le cas échéant un voyant indicateur d'une défaillance, dite aussi lampe MIL (acronyme anglais pour : Malfunction Indicator Lamp) en cas de dépassement d'un seuil de diagnostic embarqué OBD.

On connaît de l'état de la technique divers procédés qui visent à diagnostiquer un tel système. Par exemple, la publication FR-A1-3057022 divulgue un procédé de surveillance d'un catalyseur associé à un moteur à allumage commandé, comportant une sonde à oxygène amont proportionnelle et une sonde à oxygène aval binaire.

Le procédé comprend une première procédure de diagnostic, au cours de laquelle on applique une série de premières oscillations de consigne de régulation à la consigne de richesse de mélange air-carburant à envoyer dans le moteur, de manière à obtenir alternativement des gaz brûlés riches en oxygène et des gaz brûlés pauvres en oxygène en amont du calculateur. On calcule ensuite la valeur d'une première variable d'état, comme étant égale à l'intégrale temporelle, pendant la durée des oscillations, de la valeur absolue de la différence entre la valeur de la richesse brute indiquée par la sonde aval et la valeur d'une richesse filtrée de la sonde aval. Le catalyseur est considéré comme non défaillant lorsque ladite première variable est inférieure à un seuil.

Dans le cas contraire, cette première procédure de diagnostic est complétée par une deuxième procédure de diagnostic, au cours de laquelle un calcul de la capacité de stockage en oxygène OSC du catalyseur est réalisé ; Pour cela, on applique une deuxième oscillation de consigne de richesse comprenant une incursion vers le mélange riche et une incursion vers le mélange pauvre, chaque incursion étant d'une durée plus longue que les incursions de la première procédure (par exemple : 3 secondes au lieu de 0,4 seconde). On calcule l'OSC comme étant égale à l'intégrale temporelle du produit : du débit d'air ; du taux d'oxygène dans l'air ; et, d'un facteur égal à 1 moins la valeur de la richesse correspondant au signal de la sonde amont. Le calcul intégral débute lorsque le signal de la sonde amont franchit le seuil stoechiométrique et descend dans les valeurs de mélange pauvre, et il se termine lorsque la sonde aval, de comportement binaire, bascule également vers les valeurs de mélange pauvre.

Selon cette publication, il est en outre prévu que, pendant la première procédure de diagnostic, on calcule une deuxième variable spécifique de la sonde à oxygène proportionnelle amont, comme égale à la valeur moyenne de l'amplitude du signal de richesse de la sonde amont qui est observée sur chaque oscillation de richesse comprenant une incursion en mélange riche et une incursion en mélange pauvre, pour émettre un diagnostic sur l'état de fonctionnement de la sonde amont. Une alerte peut par exemple être déclenchée lorsque la valeur de cette variable spécifique est inférieure à un seuil spécifique associé à la sonde.

La sonde à oxygène aval binaire n'est pas diagnostiquée explicitement, toutefois le calcul d'OSC qui est réalisé lors de la deuxième procédure de diagnostic permet implicitement de s'assurer qu'elle est apte à basculer vers un signal indiquant un mélange pauvre avant la fin de la durée de l'oscillation de richesse.

De tels procédés de diagnostic intrusifs, dans lesquels on modifie la régulation de richesse habituelle du moteur, présentent de nombreux inconvénients. Les oscillations forcées de consigne de richesse entraînent une forte augmentation des émissions polluantes du moteur, plus particulièrement les oscillations qui visent à déterminer une valeur d'OSC d'un catalyseur, telles que celles de la deuxième procédure de diagnostic de la publication FR-A1-3057022. D'autre part, plus l'amplitude des oscillations de consigne de richesse augmente, plus l'agrément de conduite est dégradé

En outre, ces diagnostics intrusifs, notamment ceux qui visent à déterminer l'OSC d'un catalyseur, ne peuvent être mis en oeuvre que dans des conditions de stabilité de régime et de charge du moteur, ce qui limite l'occurrence du diagnostic (ou : IUPR pour In Use Performance Ratio). C'est plus particulièrement le cas pour les catalyseurs à gros volume, qui présentent une capacité de stockage en oxygène élevée, et qui sont donc plus longs à se remplir et à se vider d'oxygène. Sur de tels catalyseurs, l'apparition de conditions de fonctionnement transitoires du moteur interrompt fréquemment le diagnostic avant que le signal de sonde à oxygène aval ait basculé en mélange pauvre. Ainsi, il est plus difficile de diagnostiquer non seulement le catalyseur, mais aussi la sonde binaire aval. La publication DE 10 2010 035365 A1 décrit un procédé de diagnostic d'un catalyseur d'un véhicule automobile avec un moteur à allumage commandé.

## Présentation de l'invention

La présente invention vise à remédier à ces défauts des procédés connus de diagnostic des systèmes de post-traitement des moteurs à allumage commandé. Elle propose pour cela un procédé de diagnostic d'un système de post-traitement d'un moteur à allumage commandé de véhicule automobile, comprenant un catalyseur associé à une sonde à oxygène amont proportionnelle et à une sonde aval binaire pour la régulation de la richesse du mélange air-carburant à introduire dans le moteur, comprenant une étape de calcul de la capacité de stockage en oxygène du catalyseur.

La principale caractéristique du procédé selon l'invention est qu'il comprend :

- des étapes aptes à détecter un début de lever de pied de la pédale d'accélérateur du véhicule de la part d'un conducteur du véhicule, au moment duquel le catalyseur est sensiblement vide d'oxygène ;
- en cas d'une telle détection, une étape dans laquelle on coupe l'injection de carburant dans le moteur et on ouvre un boîtier-papillon du moteur ; puis, une étape dans laquelle on calcule ladite capacité de stockage en oxygène du catalyseur pendant ladite phase de lever de pied ; et,

- une étape de calcul d'une valeur moyenne de valeurs calculées de capacité de stockage en oxygène, et une étape de comparaison de ladite valeur moyenne avec un seuil pour déterminer l'état défaillant ou non du catalyseur, comprenant en outre qu'

on détecte que le catalyseur est sensiblement vide d'oxygène au début d'un lever de pied par des étapes au cours desquelles: U

- on calcule un ratio d'oxygène (Ros) dans le catalyseur, égal au pourcentage de la capacité de stockage en oxygène (OSC) du catalyseur correspondant à la quantité d'oxygène (OS) qui est stockée, U
- on compare ledit ratio d'oxygène (Ros) avec un seuil, et, U
- on détecte que le catalyseur est sensiblement vide si ledit ratio est inférieur audit seuil.

**Brève description des figures**

D'autres caractéristiques et avantages de l'invention apparaîtront à la lecture de la description qui suit d'un mode de réalisation non limitatif de l'invention, à l'appui des figures annexées, dans lesquelles :

[Fig. 1] est une vue schématique d'un dispositif de motorisation apte à la mise en oeuvre du procédé selon l'invention.
[Fig. 2] est un logigramme des étapes d'un mode de réalisation du procédé selon l'invention.

**Description détaillée des figures**

Dans la description qui va suivre, des chiffres de référence identiques désignent des pièces identiques ou ayant des fonctions similaires.

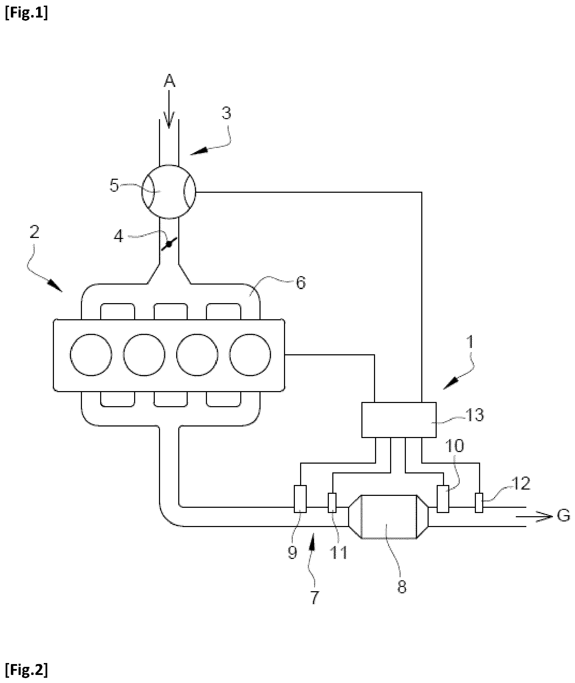

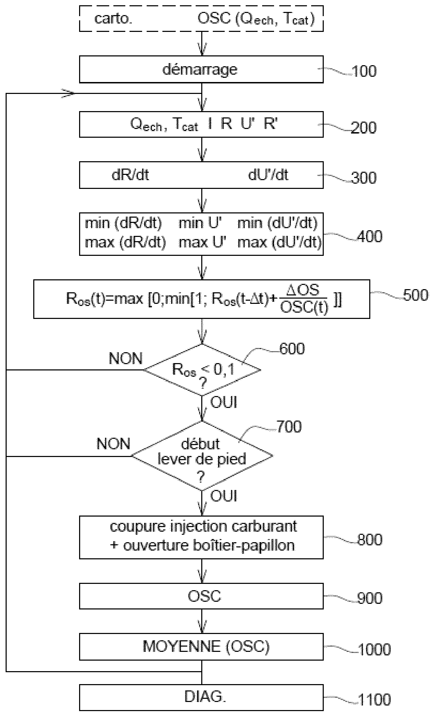

Sur la figure 1, on a représenté de manière non limitative un dispositif de motorisation 1 apte à la mise en oeuvre du procédé selon l'invention. Le dispositif comprend un moteur à combustion interne 2 du type à allumage commandé (fonctionnant notamment à l'essence), par exemple à injection directe, grâce à des injecteurs de carburant (non représentés) aptes à injecter le carburant dans les différents cylindres du moteur. Il peut s'agir d'un moteur à aspiration naturelle ou suralimenté. Il peut encore présenter d'autres particularités non représentées, comme par exemple être associé à au moins un circuit de recirculation partielle des gaz d'échappement à l'admission, sans nuire à la généralité de l'invention. Sur cet exemple illustré par la figure 1, le moteur se présente sous la forme d'un moteur à quatre cylindres en ligne.
Pour la combustion du carburant dans Le moteur aspire de l'air dans l'atmosphère extérieure, qui pénètre dans un circuit d'admission d'air du moteur dans le sens de la flèche A. S'agissant d'un moteur à allumage commandé, la quantité (débit massique) d'air Qair pénétrant dans le moteur est dosée grâce à une vanne 4, ou boîtier-papillon 4, du moteur. Le circuit d'admission d'air comprend des moyens de détermination 5 de la quantité d'air admise dans le moteur, qui se présentent ici sous la forme d'un débitmètre 5. En variante classique, il est aussi possible de déterminer la quantité d'air à partir d'une mesure de la pression Pcoll et de température Tcoll dans un répartiteur 6, ou collecteur d'admission 6 du moteur, du régime N du moteur et d'une valeur de rendement de remplissage $\eta$rempl du moteur. Par rendement de remplissage, on entend de manière connue le rapport de la quantité d'air qui pénètre réellement dans les cylindres du moteur, divisée par la quantité d'air qui peut théoriquement y pénétrer.
Les gaz de combustion du moteur sont évacués dans l'atmosphère extérieure par l'intermédiaire d'un circuit d'échappement 7 du moteur, dans le sens de la flèche G. Le circuit d'échappement comprend un catalyseur trois voies (ou TWC pour : Three Way Catalyst) qui est apte à traiter dans une certaine proportion les molécules polluantes d'e monoxyde de carbone (CO), d'hydrocarbures imbrûlés (HC) et d'oxydes d'azote (NOx) contenues dans les gaz de combustion du moteur, avant que ces derniers ne soient rejetés dans l'atmosphère extérieure. Le circuit d'échappement peut comporter des dispositifs de dépollution supplémentaires non représentés, par exemple un second catalyseur trois voies monté à l'aval du catalyseur 8, un filtre à particules, etc. qui ne rentrent pas dans le cadre de l'invention.
Le catalyseur 8 est associé, pour le réglage de la richesse du mélange air-carburant admis dans le moteur selon l'invention, à une sonde à oxygène amont 9, c'est-à-dire une sonde à oxygène montée à l'entrée du catalyseur, dans le sens de circulation des gaz de combustion, et à une sonde à oxygène aval 10, c'est-à-dire à une sonde à oxygène montée à la sortie du catalyseur, dans le sens de circulation des gaz de combustion. La sonde à oxygène amont 9 est du type proportionnel et la sonde à oxygène aval 10 est du type binaire.
En outre, pour la mise en oeuvre du procédé de réglage de la richesse selon l'invention, le dispositif de motorisation comprend des moyens de détermination d'une valeur de la température Tcat du catalyseur. Ceux-ci peuvent se présenter dans un mode simplifié sous la forme d'un capteur de température amont 11 du catalyseur, ou d'un capteur de température aval 12 du catalyseur, ou de l'ensemble des deux capteurs amont 11 et aval 12 et de moyens de calcul à partir desquels on détermine la température du catalyseur Tcat comme la moyenne de la température amont et de la température aval. Il peut s'agir aussi d'un modèle plus sophistiqué d'estimation de la température du catalyseur à partir de la température amont du catalyseur et d'un historique du point de fonctionnement du moteur (régime et charge notamment). D'autres variantes sont possibles sans nuire à la généralité de l'invention.

Un système électronique de commande 13 du moteur, ou calculateur 13, permet de déterminer une quantité (débit) de carburant Qcarb à injecter dans le moteur pour que la richesse du mélange soit la plus proche d'une valeur cible de richesse donnée. Il est aussi possible au calculateur 13 de déterminer un temps d'injection $T_i$ du carburant qui correspond à la quantité Qcarb à injecter.

Pour cela, il convient de fournir au calculateur 13 des informations et des paramètres tels que la quantité d'air Qair admise dans le moteur et une information représentative de la richesse du mélange air-carburant visée. Ainsi, le calculateur 13 est relié, sur l'exemple de la figure 1, au moins au débitmètre 5 et à la sonde à oxygène amont 9. Le débitmètre indique la quantité de carburant et la sonde à oxygène amont 9, qui est une sonde de type proportionnel, fournit une mesure de la richesse R en amont du catalyseur par l'intermédiaire d'un signal de sortie qui est généralement une valeur d'intensité I.

De plus, pour la mise en oeuvre du procédé selon l'invention, le calculateur est aussi relié à la sonde à oxygène aval 10, qui se peut se présenter sous la forme d'une sonde binaire (sans exclure la possibilité d'une sonde proportionnelle) et aux moyens de détermination de la température du catalyseur Tcat (i.e. au capteur de température amont 11 et/ou aval 12 sur l'exemple de la figure.

La figure 2 représente un logigramme des étapes d'un mode de réalisation du procédé selon l'invention. Le procédé vise à ne pas perturber la régulation de richesse habituelle du moteur par des réglages intrusifs de consigne de richesse. Pour cela, il profite de manière opportuniste de certaines phases de levers de pied pour calculer l'OSC du catalyseur 8. Par lever de pied, on entend le fait que le conducteur du véhicule relâche complètement le pied de la pédale d'accélérateur du véhicule. Bien que ces phases ne puissent être prévues, elles se produisent généralement assez fréquemment, notamment dans les pentes descendantes ou à l'approche des feux rouges, pour que le diagnostic puisse être mis oeuvre à une fréquence satisfaisante au regard de la législation. Les levers de pied sont interprétés par le calculateur comme une consigne de couple moteur nulle, et l'injection de carburant est coupée. Le catalyseur reçoit de l'air pur chargé d'oxygène et se charge d'oxygène jusqu'à saturation (c'est-à-dire jusqu'à l'atteinte de l'OSC) pour peu que le lever de pied soit assez long.

Selon l'invention, on ouvre complètement le boîtier-papillon 4 du moteur lors des levers de pied, de sorte que la saturation du catalyseur intervienne très rapidement, y compris dans le cas d'un catalyseur de grande taille. D'autre part, pour pouvoir calculer l'OSC, on ne retient pour faire les calculs d'OSC que les phases de lever de pied dans lesquelles le catalyseur 8 est presque vide d'oxygène au début du lever de pied, par exemple les phases de lever de pied au début desquelles la quantité d'oxygène OS est inférieure à un dixième de l'OSC. En d'autres termes, l'invention propose de détecter, parmi les phases de lever de pied, celles pour lesquelles la quantité d'oxygène OS est considérée comme nulle au départ, et de réaliser un calcul d'OSC depuis cet instant de début de lever de pied, et jusqu'à la saturation du catalyseur en oxygène qui intervient au cours du lever de pied.

Avantageusement, on pourra augmenter la fréquence des cas où la quantité d'oxygène stockée OS est inférieure au dixième de l'OSC au début des levers de pied par une régulation spécifique de la richesse du moteur visant à réduire l'OSC du catalyseur. Par exemple, dans la publication FR-A1-3033364 qui décrit un exemple de régulation en double boucle de la richesse avec une sonde amont proportionnelle par rapport à une consigne variable, cette régulation est appliquée à la gestion de l'oxygène stocké. La consigne de richesse est ajustée en fonction d'une quantité d'oxygène OS dans le catalyseur, qui est elle-même régulée autour d'une consigne d'oxygène qui est une fonction de l'OSC du catalyseur. Il est mentionné à titre d'exemple que la consigne de stock d'oxygène peut être égale à 70% de l'OSC de manière à favoriser davantage le traitement des NOx. Pour la mise en oeuvre de l'invention, on pourra avantageusement prévoir une consigne de stock d'oxygène égale à 10% de l'OSC pour le fonctionnement normal du moteur, jusqu'à ce que l'OSC du catalyseur ait été déterminée suffisamment souvent. Bien entendu, d'autres adaptations de procédés de régulation de la richesse sont possibles sans nuire à la généralité de l'invention.

D'autres mesures relatives à la sonde proportionnelle amont 9 et à la sonde binaire aval 10 sont aussi réalisées pendant le trajet du véhicule, sans modifier le fonctionnement du moteur, pour diagnostiquer lesdites sondes en parallèle, comme le logigramme détaillé suivant l'indique.

Le procédé est itératif par pas de temps $\Delta t$ de calculateur, par exemple d'une durée d'environ 10 millisecondes. Il se déroule depuis le démarrage du moteur (étape 100) et prend fin lorsqu'un nombre suffisant de valeurs d'OSC a été calculé pour satisfaire la norme. Préalablement à sa mise en oeuvre, on a stocké en mémoire du calculateur une cartographie donnant la capacité de stockage en oxygène OSC d'un catalyseur neuf en fonction du débit des gaz d'échappement Qech et de la température du catalyseur Tcat. Les valeurs peuvent être déterminées expérimentalement. Cette étape préalable est représentée en pointillés sur la figure 2.

Au cours d'une étape 200, on détermine (à chaque instant t séparé du précédent d'un pas de temps $\Delta t$) des

valeurs du débit des gaz d'échappement Qech, de la température Tcat du catalyseur 8, de la richesse amont R, et de la tension U' de la sonde à oxygène aval. Par exemple, le débit des gaz d'échappement peut être obtenu en additionnant le débit d'air Qair mesuré par le débitmètre et le débit de carburant Qcarb injecté dans le moteur. Par exemple, la température du catalyseur est obtenue à partir des informations des sondes de température amont 11 et aval 12. Par exemple la richesse des gaz R en amont du catalyseur est obtenue à partir d'une valeur de signal d'intensité I de courant à ses bornes.

Au cours d'une étape 300, on calcule une valeur de gradient, ou de dérivée, de la richesse amont dR/dt et une valeur de gradient, ou de dérivée, de la tension de la sonde aval dU'/dt.Par exemple, on peut calculer le gradient de richesse amont R en divisant l'écart entre la richesse à l'instant courant t et la richesse obtenue à l'instant précédent par le pas de temps $\Delta t$. De même, on peut mutatis mutandis calculer le gradient de la tension de la sonde aval.

Au cours d'une étape 400, on détermine une valeur minimale du gradient de richesse amont depuis le démarrage du moteur (dR/dt)min, une valeur maximale du gradient de richesse amont depuis le démarrage du moteur (dR /dt)max, une valeur minimale de la tension de la sonde aval U'min depuis le démarrage du moteur, une valeur maximale de la tension de la sonde aval U'max depuis le démarrage du moteur, une valeur minimale du gradient de tension de la sonde aval (dU'/dt)min depuis le démarrage du moteur, et une valeur maximale du gradient de tension de la sonde aval (dU'/dt) depuis le démarrage du moteur.

Au cours d'une étape 500, on calcule une valeur de ratio d'oxygène Ros dans le catalyseur 8, correspondant au pourcentage de la capacité de stockage en oxygène OSC du catalyseur que représente la quantité d'oxygène courante stockée dans le catalyseur.

A chaque instant courant de calcul t, on peut par exemple appliquer la formule suivante :

$$Ros(t) = max [ 0 , min [ 1 , Ros(t-\Delta t) + \Delta OS/OSC(t) ] ]$$

,formule dans laquelle :

- Ros(t) désigne le ratio d'oxygène à l'instant courant t

- Ros(t-$\Delta t$) désigne le ratio d'oxygène à l'instant précédent

- $\Delta OS$ désigne la variation de quantité d'oxygène en plus ou en moins dans le catalyseur pendant le pas de temps $\Delta t$

- OSC(t) désigne la valeur de l'OSC à l'instant courant.

La formule précédente indique que le ratio d'oxygène est calculé à l'instant courant t en ajoutant au ratio calculé à l'instant précédent une valeur égale au rapport de la variation de la quantité d'oxygène divisée par la capacité de stockage, mais que toutefois ce calcul est ensuite saturé à 0 ou à 1. Le cas où le ratio est saturé à 0 correspond au fait que le catalyseur est complètement vide d'oxygène et le cas où le ratio est saturé à 1 correspond au fait qu'il est complètement plein d'oxygène.

Dans un mode simplifié de l'invention, la valeur courante de la capacité de stockage en oxygène OSC(t) est déterminée à partir du débit des gaz d'échappement Qech et de la température du catalyseur Tcat, en utilisant la cartographie de l'OSC d'un catalyseur neuf préalablement stockée dans une mémoire du calculateur. Dans un mode perfectionné, il est aussi possible d'utiliser une valeur modifiée qui tient compte de l'énergie des gaz d'échappement que le catalyseur a rencontrée depuis le début de son fonctionnement. Par exemple, on multiplie la valeur de l'OSC du catalyseur neuf par un facteur de stabilisation Fstab qui est cartographié à l'avance en fonction de la température du catalyseur Tcat et de l'énergie E(t) cumulée depuis le montage du catalyseur en usine.

Plus précisément, l'énergie cumulée peut être calculée par sommation depuis le montage du catalyseur selon la formule suivante :

$$E(t) = SOMME [ P(t) \times \Delta t / (3,6 \times 10^6) ]$$

, formule dans laquelle P(t) désigne la puissance des gaz d'échappement en kW.

Cette puissance peut se calculer selon la formule suivante :

$$P(t) = R \times [ Tcat + 273] \times Qech / (3,6 \times 10^6)$$

, formule dans laquelle R désigne la constante des gaz parfaits.

La variation de la quantité d'oxygène peut être calculée par la formule suivante :

$$\Delta OS = Qech \times \tau O2 \times (1\text{-}R) \times \Delta t$$

, formule dans laquelle :

- Qech désigne le débit des gaz d'échappement
- $\tau$O2 désigne le taux d'oxygène dans l'air
- R désigne la richesse mesurée grâce à la sonde proportionnelle amont 9
- $\Delta$t désigne le pas de temps.

Par exemple, si on détermine le débit des gaz d'échappement en kg/h , la formule précédente devient :

$$\Delta OS = (1000 \ /3,6) \times Qech \times \tau O2 \times (1\text{-}R) \times \Delta t$$

En considérant par exemple un taux d'oxygène dans l'air de 23%, on obtient la formule approchée suivante :

$$\Delta OS = 64 \times Qech \times (1\text{-}R) \times \Delta t$$

On notera que dans un mode simplifié de l'invention, on peut calculer la variation de quantité d'oxygène à partir du signal brut de richesse R de la sonde amont, c'est-à-dire, à partir de la valeur de richesse correspondant à l'intensité I du courant à ses bornes. Dans un mode perfectionné, on pourra avantageusement utiliser une valeur filtrée Rf de richesse amont, avec un filtre du premier ordre simulant une sonde amont de richesse lente à la limite d'un diagnostic de défaillance qui allume la lampe MIL.

Le procédé se poursuit par des étapes qui visent à détecter l'occurrence d'un lever de pied au début duquel le catalyseur est presque vide d'oxygène. Il comprend une première étape de test 600 dans laquelle on vérifie à l'instant courant t si le ratio d'oxygène Ros dans le catalyseur est inférieur à un seuil faible, par exemple 0,1 , qui signifie que le catalyseur est rempli à moins de dix pour cent de sa capacité maximale. On rappelle que cette condition peut être favorisée, dans un mode perfectionné de l'invention, par un réglage plus riche du mélange.

Si tel n'est pas le cas, aucun calcul d'OSC n'est réalisé, et le procédé reprend à l'étape 200. Dans le cas contraire, le procédé oriente vers une deuxième étape de test 700 au cours de laquelle on vérifie si cet instant courant correspond à un début de lever de pied. Pour cela, le calculateur peut par exemple mesurer le signal d'un potentiomètre de la pédale d'accélérateur du véhicule, qui indique le degré d'enfoncement de celle-ci. Un début de lever de pied correspond au fait qu'à l'instant précédent, la pédale était encore au moins partiellement enfoncée, et qu'à l'instant courant elle est complètement relevée.

Si aucun début de lever de pied n'est constaté, aucun calcul d'OSC n'est réalisé, et le procédé reprend aussi à l'étape 200. Dans le cas contraire, le procédé oriente vers une étape 800, dans laquelle l'injection de carburant dans le moteur est arrêtée et le boîtier-papillon du moteur est complètement ouvert.

Puis le procédé se poursuit par une étape 900 de calcul de l'OSC, par exemple par application de la formule simplifiée suivante similaire à celle qui est utilisée pour le calcul de la variation de la quantité d'oxygène :

$$OSC = SOMME \ [ \ 64 \times Qech \times (1\text{-}R) \times \Delta t]$$

Cette somme correspond à un calcul intégral, qui débute à l'instant du début de la phase de lever de pied (où on coupe l'injection de carburant), et qui se termine à l'instant où le signal de tension U' de la sonde à oxygène binaire aval bascule en mélange pauvre (par exemple, en dessous d'un seuil de tension d'environ 250 mV).

On notera qu'on peut aussi utiliser une valeur filtrée de la richesse amont Rf à la place de la valeur brute.

On notera aussi que si la sonde aval mesure une tension qui reste supérieure à 250 mV, on arrêtera le calcul lors de la fin de la phase de lever de pied.

Le procédé se poursuit encore par une étape de calcul 1000 d'un critère de diagnostic du catalyseur, qui est égal à la moyenne des valeurs d'OSC qui ont été calculées pendant les différents N levers de pied retenus depuis le démarrage du moteur. On pourra limiter le nombre de calculs N à une quantité minimale exigée par la norme.

Le procédé comprend encore une étape 1100 de diagnostic proprement dit, au cours de laquelle on compare différents les valeurs des critères établis pour le catalyseur et les sondes avec des seuils pour établir leur état de défaillance éventuel.

En ce qui concerne le catalyseur, on compare ladite moyenne des OSC avec un seuil de diagnostic du catalyseur. Le catalyseur est déclaré défaillant lorsque la moyenne des OSC est supérieure audit critère, qui correspond à la valeur avec laquelle les niveaux d'émissions polluantes du véhicule sont à la limite des seuils OBD. Par exemple, on peut obtenir ces niveaux d'émissions polluantes par des essais réalisés à l'avance en utilisant des catalyseurs vieillis artificiellement. Lorsque le catalyseur est suffisamment vieilli pour que les émissions polluantes correspondent à ces seuils, on considère qu'il s'agit d'un catalyseur OBD et on peut cartographier ses valeurs d'OSC en fonction du débit d'échappement Qech et de la température du catalyseur Tcat, de manière à pouvoir établir la valeur du seuil de diagnostic du catalyseur.

En ce qui concerne la sonde à oxygène amont, on réalise les deux diagnostics suivants : on compare la valeur maximale du gradient de richesse dR/dt de la sonde amont pendant le roulage par rapport à un seuil. Si ladite valeur est inférieure audit seuil, la sonde est déclarée défaillante car elle est trop lente vers le riche, c'est-à-dire, dans les transitions vers un mélange plus riche. On compare aussi la valeur minimale du gradient de richesse dR/dt avec un seuil. Si ladite valeur est inférieure audit seuil, la sonde est déclarée défaillante car elle est trop lente vers le pauvre. Dans les autres cas, la sonde est bonne.

En ce qui concerne la sonde aval, on réalise les quatre diagnostics suivants :
On compare la valeur maximale de la tension de la sonde aval U' avec un seuil. Si ladite valeur est inférieure audit seuil, la sonde est déclarée défaillante car elle est anormalement pauvre.

On compare la valeur minimale de la tension de la sonde aval U' avec un seuil. Si ladite valeur est supérieure audit seuil, la sonde est déclarée défaillante car elle est anormalement riche.

On compare la valeur maximale du gradient de tension aval dU'/dt avec un seuil. Si ladite valeur maximale est inférieure audit seuil, la sonde est déclarée défaillante car elle est trop lente vers le riche.

On compare la valeur minimale du gradient de tension aval dU'/dt avec un seuil. Si ladite valeur est inférieure audit seuil, la sonde est déclarée défaillante car elle est trop lente vers le pauvre.

Dans les autres cas de figure, la sonde aval est déclarée bonne.

Avantageusement, on réalise le diagnostic du catalyseur après avoir réalisé le diagnostic des sondes, de manière à éviter des fausses détections du catalyseur.

Le procédé peut se poursuivre par des étapes non représentées au cours desquelles on incrémente les indicateurs IUPR (In Use Performance Ratio) des trois composants, et où on allume une lampe MIL si l'un des trois composants est défaillant.

On notera que procédé selon le mode de réalisation qui vient d'être décrit peut présenter d'autres caractéristiques avantageuses. Par exemple, on notera que, puisque le boîtier-papillon du moteur est ouvert pendant les phases de lever de pied, on ne dispose généralement pas de frein moteur, et il convient donc que le conducteur puisse actionner le cas échéant les freins du véhicule, qui disposent généralement d'une assistance mettant en oeuvre une pompe à vide. Il convient alors de s'assurer que la réserve de vide soit suffisante avant d'ouvrir le boîtier-papillon, et d'inhiber cette ouverture si ce n'est pas le cas.

**Revendications**

1. Procédé de diagnostic d'un système de post-traitement d'un moteur à allumage commandé (2) de véhicule automobile, comprenant un catalyseur (8) associé à une sonde à oxygène amont (9) proportionnelle et à une sonde aval (10) binaire pour la régulation de la richesse du mélange air-carburant à introduire dans le moteur, comprenant une étape de calcul (900) de la capacité de stockage en oxygène (OSC) du catalyseur, et comprenant :

   - Des étapes (600,700) aptes à détecter un début de lever de pied de la pédale d'accélérateur du véhicule de la part d'un conducteur du véhicule, au moment duquel le catalyseur est sensiblement vide d'oxygène ;
   - En cas d'une telle détection, une étape (800) dans laquelle on coupe l'injection de carburant dans le moteur et on ouvre un boîtier-papillon (4) du moteur ; puis une étape (900) dans laquelle on calcule ladite capacité de stockage en oxygène (OSC) du catalyseur pendant ladite phase de lever de pied ;
   - Une étape de calcul (1000) d'une valeur moyenne de valeurs calculées de capacité de stockage en oxygène (OSC), et une étape de comparaison (1100) de ladite valeur moyenne avec un seuil pour déterminer l'état défaillant ou non du catalyseur,

   **CARACTERISE EN CE QU'**on détecte que le catalyseur est sensiblement vide d'oxygène au début d'un lever de pied par des étapes au cours desquelles :

- On calcule un ratio d'oxygène (Ros) dans le catalyseur, égal au pourcentage de la capacité de stockage en oxygène (OSC) du catalyseur correspondante à la quantité d'oxygène qui est stockée ;
- On compare ledit ratio d'oxygène (Ros) avec un seuil ; et,
- On détecte que le catalyseur est sensiblement vide si ledit ratio est inférieur audit seuil.

2. Procédé selon la revendication 1, **caractérisé en ce qu'**il comprend en outre des étapes de détermination des valeurs respectivement maximale et minimale du gradient de richesse (dR/dt) des gaz en amont du catalyseur, à partir d'un signal de la sonde amont, et des étapes de comparaison desdites valeurs maximale et minimale avec des seuils pour déterminer un état défaillant de la sonde amont, respectivement un état lent vers le riche et un état lent vers le pauvre.

3. Procédé selon l'une des revendications précédentes, **caractérisé en ce qu'**il comprend en outre :

   - des étapes de détermination des valeurs respectivement maximale et minimale de la tension (U') de la sonde aval et des étapes de comparaison desdites valeurs maximale et minimale avec des seuils pour déterminer un état défaillant de la sonde aval, respectivement une sonde anormalement pauvre ou anormalement riche ; et,
   - des étapes de détermination des valeurs respectivement maximale et minimale du gradient de tension (dU'/dt), et des étapes de comparaison desdites valeurs maximale et minimale avec des seuils pour déterminer un état défaillant de la sonde aval, respectivement un état lent vers le riche et un état lent vers le pauvre.

4. Procédé selon la revendication 3, **caractérisé en ce que** le diagnostic des sondes est réalisé avant le diagnostic du catalyseur.

5. Procédé selon l'une des revendications précédentes, **caractérisé en ce que** ledit seuil est sensiblement égal à 0,1.

6. Procédé selon l'une des revendications précédentes, **caractérisé en ce que** ledit ratio d'oxygène (Ros) est calculé à un instant courant (t) comme la somme d'un ratio d'oxygène (Ros) calculé à un instant précédent, et du rapport de la variation de la quantité d'oxygène (ΔOS) dans le catalyseur entre lesdits instants, divisée par la capacité de stockage en oxygène (OSC) du catalyseur, ledit calcul étant saturé à la valeur 0 ou 1.

7. Procédé selon la revendication 6, **caractérisé en ce que** ladite variation de la quantité d'oxygène (ΔOS) est calculée à partir du produit : du débit des gaz d'échappement (Qech) dans le moteur ; du taux d'oxygène dans l'air (τO2) ; et, d'un facteur égal à 1 moins la valeur de la richesse amont (R).

8. Procédé selon l'une quelconque des revendications précédentes, **caractérisé en ce que** ladite capacité de stockage en oxygène (OSC) du catalyseur est calculée à partir d'une somme de valeurs de produits du débit des gaz d'échappement (Qech), du taux d'oxygène dans l'air (τO2) et d'un facteur égal à 1 moins la valeur de la richesse amont (R), entre l'instant du début de lever de pied et un instant où le signal de la sonde aval (10) bascule vers une valeur indiquant un mélange pauvre.

9. Procédé selon l'une des revendications 7 ou 8, **caractérisé en ce que** la valeur de la richesse amont (R) est une valeur filtrée, notamment par un filtre du premier ordre.

10. Procédé selon l'une quelconque des revendications précédentes, **caractérisé en ce que**, avant le début d'un pied lever, la richesse du mélange air-carburant à introduire dans le moteur est réglée en boucle fermée sur une consigne de richesse, ladite consigne de richesse étant asservie au réglage en boucle fermée de la quantité d'oxygène stockée (OS) dans le catalyseur autour d'une valeur de consigne (OSc), ladite consigne étant sensiblement égale à 10% de la capacité de stockage en oxygène (OSC) du catalyseur.

**Patentansprüche**

1. Verfahren zum Diagnostizieren eines Nachbehandlungssystems eines fremdgezündeten Verbrennungsmotors (2), umfassend einen Katalysator (8), der einer vorgeordneten proportionalen Sauerstoffsonde (9) und einer nachgeordneten binären Sonde (10) zugeordnet ist, zur Regelung der Fettheit des in den Motor einzuleitenden Luft-Kraftstoff-Gemisches, umfassend einen Schritt des Berechnens (900) der Sauerstoffspeicherkapazität (OSC) des Katalysators und umfassend:

- Schritte (600, 700), die geeignet sind, einen Beginn des Anhebens des Fußes vom Gaspedal des Fahrzeugs seitens eines Fahrers des Fahrzeugs zu erkennen, wobei der Katalysator zu dem Zeitpunkt im Wesentlichen sauerstoffleer ist;
- Im Fall einer solchen Erkennung einen Schritt (800), bei dem die Kraftstoffeinspritzung in den Motor unterbrochen wird und ein Drosselklappenstutzen (4) des Motors geöffnet wird; dann einen Schritt (900), bei dem die Sauerstoffspeicherkapazität (OSC) des Katalysators während der Phase des Anhebens des Fußes berechnet wird;
- Einen Schritt des Berechnens (1000) eines Mittelwerts von berechneten Werten der Sauerstoffspeicherkapazität (OSC) und einen Schritt des Vergleichens (1100) des Mittelwerts mit einem Schwellenwert, um den fehlerhaften oder nicht fehlerhaften Zustand des Katalysators zu ermitteln,

**DADURCH GEKENNZEICHNET, DASS** durch Schritte erkannt wird, dass der Katalysator zu Beginn eines Anhebens des Fußes im Wesentlichen sauerstoffleer ist, in deren Verlauf:

- Man einen Sauerstoffanteil (Ros) in dem Katalysator berechnet, der gleich dem Prozentsatz der Sauerstoffspeicherkapazität (OSC) des Katalysators ist, die der gespeicherten Sauerstoffmenge entspricht;
- Man den Sauerstoffanteil (Ros) mit einem Schwellenwert vergleicht; und
- Man erkennt, dass der Katalysator im Wesentlichen leer ist, wenn der Anteil geringer als der Schwellenwert ist.

2. Verfahren nach Anspruch 1, **dadurch gekennzeichnet, dass** es ferner Schritte des Ermittelns der größten beziehungsweise kleinsten Werte des Fettheitsgradienten (dR/dt) der Gase stromauf des Katalysators anhand eines Signals der vorgeordneten Sonde umfasst und Schritte des Vergleichens der größten und kleinsten Werte mit Schwellenwerten, um einen fehlerhaften Zustand der vorgeordneten Sonde beziehungsweise einen langsamen Zustand zum Fetten hin und einen langsamen Zustand zum Mageren hin zu ermitteln.

3. Verfahren nach einem der vorhergehenden Ansprüche, **dadurch gekennzeichnet, dass** es ferner umfasst:

- Schritte des Ermittelns der größten beziehungsweise kleinsten Werte der Spannung (U') der nachgeordneten Sonde und Schritte des Vergleichens der größten und kleinsten Werte mit Schwellenwerten, um einen fehlerhaften Zustand der nachgeordneten Sonde beziehungsweise eine anormal magere beziehungsweise anormal fette Sonde zu ermitteln; und
- Schritte des Ermittelns der größten beziehungsweise kleinsten Werte des Spannungsgradienten (dU'/dt) und Schritte des Vergleichens der größten und kleinsten Werte mit Schwellenwerten, um einen fehlerhaften Zustand der stromabwärtigen Sonde beziehungsweise einen langsamen Zustand zum Fetten hin und einen langsamen Zustand zum Mageren hin zu ermitteln.

4. Verfahren nach Anspruch 3, **dadurch gekennzeichnet, dass** das Diagnostizieren der Sonden vor dem Diagnostizieren des Katalysators ausgeführt wird.

5. Verfahren nach einem der vorhergehenden Ansprüche, **dadurch gekennzeichnet, dass** der Schwellenwert im Wesentlichen gleich 0,1 ist.

6. Verfahren nach einem der vorhergehenden Ansprüche, **dadurch gekennzeichnet, dass** der Sauerstoffanteil (Ros) zu einem aktuellen Zeitpunkt (t) berechnet wird als die Summe aus einem zu einem früheren Zeitpunkt berechneten Sauerstoffanteil (Ros) und dem Verhältnis der Änderung der Sauerstoffmenge (ΔOS) in dem Katalysator zwischen den Zeitpunkten, dividiert durch die Sauerstoffspeicherkapazität (OSC) des Katalysators, wobei die Berechnung bei dem Wert 0 oder 1 saturiert ist.

7. Verfahren nach Anspruch 6, **dadurch gekennzeichnet, dass** die Änderung der Sauerstoffmenge (ΔOS) berechnet wird anhand des Produkts aus: dem Volumenstrom der Abgase (Qech) im Motor; dem Sauerstoffgehalt in der Luft (τO2); und einem Faktor gleich 1 minus dem Wert der stromaufwärtigen Fettheit (R).

8. Verfahren nach einem der vorhergehenden Ansprüche, **dadurch gekennzeichnet, dass** die Sauerstoffspeicherkapazität (OSC) des Katalysators berechnet wird anhand einer Summe aus Werten von Produkten aus dem Volumenstrom der Abgase (Qech), dem Sauerstoffgehalt in der Luft (τO2) und einem Faktor gleich 1 minus dem Wert der stromaufwärtigen Fettheit (R) zwischen dem Zeitpunkt des Beginns des Anhebens des Fußes und einem Zeitpunkt, zu dem das Signal der nachgeordneten Sonde (10) zu einem Wert kippt, der ein armes Gemisch anzeigt.

9. Verfahren nach einem der Ansprüche 7 oder 8, **dadurch gekennzeichnet, dass** der Wert der stromaufwärtigen Fettheit (R) ein gefilterter Wert ist, insbesondere durch einen Filter erster Ordnung.

10. Verfahren nach einem der vorhergehenden Ansprüche, **dadurch gekennzeichnet, dass**, vor dem Beginn einer Fußanhebung, die Fettheit des in den Motor einzuleitenden Luft-Kraftstoff-Gemisches im geschlossenen Regelkreis über eine Fettheitseinstellgröße geregelt wird, wobei die Fettheitseinstellgröße von der Regelung im geschlossenen Regelkreis der in dem Katalysator gespeicherten Sauerstoffmenge (OS) um einen Einstellgrößenwert (OSc) herum abhängig ist, wobei die Einstellgröße im Wesentlichen 10 % der Sauerstoffspeicherkapazität (OSC) des Katalysators beträgt.

## Claims

1. Method for diagnosing an after-treatment system of a spark ignition engine (2) of a motor vehicle, comprising a catalytic converter (8) associated with a proportional upstream oxygen probe (9) and with a binary downstream probe (10) for regulating the richness of the air/fuel mixture to be introduced into the engine, comprising a step (900) of calculating the oxygen storage capacity (OSC) of the catalytic converter, and comprising:

   - steps (600, 700) able to detect a start of lifting the foot off the accelerator pedal of the vehicle on the part of a driver of the vehicle, at the moment from which the catalytic converter is substantially empty of oxygen;
   - in the case of such a detection, a step (800) in which injection of fuel into the engine is interrupted and a throttle body (4) of the engine is opened; then a step (900) in which an oxygen storage capacity (OSC) of the catalytic converter is calculated during said foot-lifting phase;
   - a step (1000) of calculating an average value of calculated oxygen storage capacity (OSC) values, and a step (1100) of comparing said average value with a threshold in order to determine the defective or nondefective state of the catalytic converter,

   **CHARACTERIZED IN THAT** it is detected that the catalytic converter is substantially empty of oxygen at the start of a foot-lifting action by steps during which:

   - an oxygen ratio (Ros) is calculated in the catalytic converter, equal to the percentage of the oxygen storage capacity (OSC) of the catalytic converter corresponding to the oxygen quantity which is stored;
   - said oxygen ratio (Ros) is compared with a threshold; and
   - it is detected that the catalytic converter is substantially empty if said ratio is below said threshold.

2. Method according to Claim 1, **characterized in that** it further comprises steps of determining respective maximum and minimum values of the richness gradient (dR/dt) of the gases upstream of the catalytic converter from a signal from the upstream probe, and steps of comparing said maximum and minimum values with thresholds in order to determine a defective state of the upstream probe and, respectively, a slow state toward rich and a slow state toward lean.

3. Method according to either of the preceding claims, **characterized in that** it further comprises:

   - steps of determining respective maximum and minimum values of the voltage (U') of the downstream probe and steps of comparing said maximum and minimum values with thresholds in order to determine a defective state of the downstream probe and, respectively, an abnormally lean probe or abnormally rich probe; and
   - steps of determining respective maximum and minimum values of the voltage gradient (dU'/dt), and steps of comparing said maximum and minimum values with thresholds in order to determine a defective state of the downstream probe and, respectively, a slow state toward rich and a slow state toward lean.

4. Method according to Claim 3, **characterized in that** the diagnostics of the probes is carried out before the diagnostics of the catalytic converter.

5. Method according to one of the preceding claims, **characterized in that** said threshold is substantially equal to 0.1.

6. Method according to one of the preceding claims, **characterized in that** said oxygen ratio (Ros) is calculated at a current instant (t) as the sum of an oxygen ratio (Ros) calculated at a preceding instant, and of the ratio of the variation in the oxygen quantity (ΔOS) in the catalytic converter between said instants, divided by the oxygen storage capacity (OSC) of the catalytic converter, said calculation being saturated at the value 0 or 1.

7. Method according to Claim 6, **characterized in that** said variation in the oxygen quantity (ΔOS) is calculated from the product of the flow rate of the exhaust gases (Qexh) in the engine; of the level of oxygen in the air (τO2); and of a factor equal to 1 less the value of the upstream richness (R).

8. Method according to any one of the preceding claims, **characterized in that** said oxygen storage capacity (OSC) of the catalytic converter is calculated from a sum of values of products of the flow rate of the exhaust gases (Qexh), of the level of oxygen in the air (τO2) and of a factor equal to 1 less the value of the upstream richness (R), between the instant of the start of lifting of the foot and an instant where the signal from the downstream probe (10) switches toward a value indicating a lean mixture.

9. Method according to either of Claims 7 and 8, **characterized in that** the value of the upstream richness (R) is a filtered value, in particular filtered by a first-order filter.

10. Method according to any one of the preceding claims, **characterized in that**, before the start of a foot-lifting action, the richness of the air-fuel mixture to be introduced into the engine is adjusted in closed loop to a richness setpoint, said richness setpoint being slaved to the closed-loop adjustment of the stored oxygen quantity (OS) in the catalytic converter around a setpoint value (OSc), said setpoint being substantially equal to 10% of the oxygen storage capacity (OSC) of the catalytic converter.

**[Fig.1]**

**[Fig.2]**

EP 4 041 998 B1

carto.     OSC (Q$_{ech}$, T$_{cat}$)

démarrage — 100

Q$_{ech}$, T$_{cat}$   I   R   U'   R' — 200

dR/dt       dU'/dt — 300

min (dR/dt)   min U'   min (dU'/dt)
max (dR/dt)   max U'   max (dU'/dt) — 400

$R_{os}(t)=max\ [0;min[1;\ R_{os}(t-\Delta t)+\frac{\Delta OS}{OSC(t)}\ ]]$ — 500

NON    $R_{os} < 0,1$ ? — 600

OUI

NON    début lever de pied ? — 700

OUI

coupure injection carburant
+ ouverture boîtier-papillon — 800

OSC — 900

MOYENNE (OSC) — 1000

DIAG. — 1100

15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2833309 A1
- FR 3033364 A1
- FR 3057022 A1
- DE 102010035365 A1